# EUROPEAN PATENT APPLICATION

(11) **EP 4 693 063 A1**
(43) Date of publication of application: **11.02.2026**
(21) Application number: 25179173.7
(22) Date of filing: 27.05.2025
(51) Int. Cl.: G06F 16/245

(54) **SMART QUERY ROUTING IN HYBRID DATABASE**

(30) Priority: 08.08.2024 US 202418798631
(71) Applicant: Lemon Inc., Grand Cayman, KY1-1205 (KY); Beijing Zitiao Network Technology Co., Ltd., Beijing 100190 (CN)
(72) Inventor: LUO, Shangyu, Los Angeles, 90066 (US); XIE, Yu, Beijing, 100028 (CN); ZHANG, Li, Los Angeles, 90066 (US); LIU, Ye, Los Angeles, 90066 (US); CHEN, Jianjun, Los Angeles, 90066 (US)
(74) Representative: Marks & Clerk LLP

(57) **Abstract**

A hybrid transactional/analytical processing, HTAP, database (10) is provided. The HTAP database includes a shared storage (26) holding data, an online analytical processing (OLAP) engine, and an online transaction processing, OLTP, engine provided separately from the OLAP engine (14). The OLTP engine (12) includes a query router configured to route a query received by the OLTP engine (12) to either the OLAP engine (14) or the OLTP engine (12) for execution.

## Description

### BACKGROUND

Databases are designed with various types of architecture. Online transaction processing (OLTP) architecture is oriented toward processing transactions. Like with a bank account, transactions tend to be simple and numerous, and may include queries such as read, insert, update, delete, etc. However, OLTP architecture lacks massively parallel processing (MPP) capability. In contrast, online analytical processing (OLAP) architecture is oriented toward processing data analysis. Queries handled by OLAP architecture tend to be more complex, involve more data, and take more time to complete. For example, OLAP architecture may be responsible for determining an average sale price over the past year of a particular product tracked by the database. Many database users have use for both types of processing using the same data, and thus a hybrid transactional/analytical processing (HTAP) database has been developed which includes both types of architecture in a single database.

However, since the OLAP and OLTP engines specialize at processing different queries, user input directed to a unified query interface of the HTAP database needs to be directed to the correct engine. The user may be able to manually select an engine, or a proxy may be able to perform some rudimentary sorting, but there remains room for improvement in ensuring that the best engine for the job is selected based on a variety of factors.

### SUMMARY

To address these issues, a hybrid transactional/analytical processing (HTAP) database is provided herein that includes a shared storage holding data, an online analytical processing (OLAP) engine, and an online transaction processing (OLTP) engine provided separately from the OLAP engine. The OLTP engine includes a query router configured to route a query received by the OLTP engine to either the OLAP engine or the OLTP engine for execution.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 illustrates a hybrid transactional/analytical processing (HTAP) database according to one example of the present disclosure.
FIG. 2 illustrates detailed operation of a query router of the HTAP database of FIG. 1.
FIG. 3 shows an example flowchart of a method for routing queries in an HTAP database according to one example of the present disclosure.
FIG. 4 shows a schematic view of an example computing environment in which the HTAP database of FIG. 1 may be enacted.

### DETAILED DESCRIPTION OF EMBODIMENTS

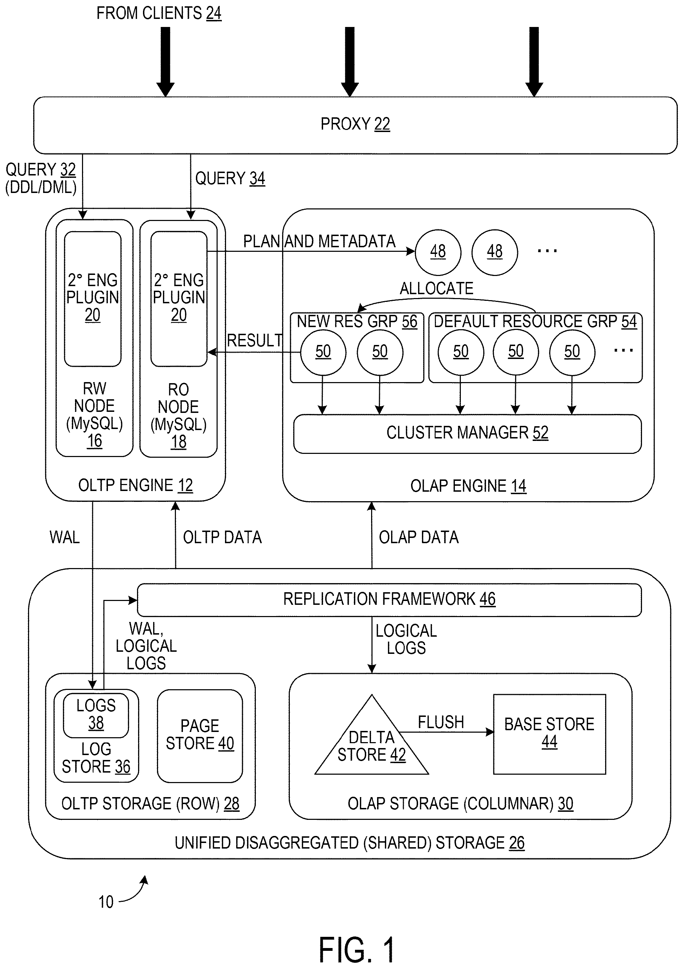

FIG. 1 illustrates a hybrid transactional/analytical processing (HTAP) database 10 according to one example of the present disclosure. The HTAP database 10 may be hybridized in the sense that it includes both an online transaction processing (OLTP) engine 12 and an online analytical processing (OLAP) engine 14, which may be provided separately from the OLTP engine 12. That is, the HTAP database 10 may include separated compute engines. Keeping the two engines 12, 14 separate may allow each separate engine 12, 14 to exhibit peak performance for their respective workloads for which they are specialized while avoiding interference therebetween. Examples of HTAP databases with unified engines include SAP HANA and MEMSQL, and examples with separate engines include WILDFIRE and TIDB.

The OLTP engine 12 may include a read-write (RW) node 16 and a read-only (RO) node 18. Each node 16, 18 may include a respective secondary engine plugin 20, which is an extension that allows a proxy 22 to send all queries from clients 24 to the OLTP engine 12 and allow the OLTP engine 12 to determine which engine 12, 14 to use for a given query based on a variety of parameters such as query complexity. For example, data manipulation language (DML) queries and data definition language (DDL) queries may be sent only to the RW node 16, while other types of queries can be handled by either node 16, 18. By directing queries in this manner rather than at the proxy 22, the database 10 can support a read committed isolation level across both engines 12, 14, thereby guaranteeing the same results from either. For decreased latency, users may be given the option of sending queries directly to the OLAP engine 14 when the final destination is known from the start.

In contrast to the separate engines 12, 14, the HTAP database 10 may include a shared storage 26 holding data of multiple tenants. The shared storage 26 may be shared in the sense that it includes both an OLTP storage 28 holding data in row format for responding to queries of the OLTP engine 12, and an OLAP storage 30 holding data in column format for responding to queries of the OLAP engine 14. Typically, systems with separate compute engines also include separate storage, which commonly has low data freshness for OLAP queries.

The HTAP database 10 may be configured to support one unified application programming interface (API) and automatically route queries from the clients 24 to the OLTP engine 12 and OLAP engine 14 using the proxy 22. On a basic level, DML queries, DDL queries, simple queries, and queries otherwise suitable for OLTP (e.g., with predicates over indexes on OLTP tables) are included in queries 32 that are routed to the OLTP engine 12, while complex queries, such as those with multiple joins and aggregations, are included in queries 34 that are routed to the OLAP engine 14. In this manner, interference between OLTP and OLAP workloads is avoided while queries are performed by the appropriate engine 12, 14.

The OLTP storage 28 may include a log store 36 configured to persist logs 38 and a page store 40 configured to store versions of data pages and apply the logs 38 to construct current versions of the data pages. The logs 38 may include various types of logs, such as redo logs, logical logs, and write-ahead logs (WAL). The page store 40 may use redo logs to construct the data pages, while logical logs such as MYSQL binary logs for committed DML transactions may be passed on to the OLAP storage 30. The OLAP storage 30 may include a delta store 42 configured to record changes made to the OLTP storage 28, and a base store 44 configured to implement updates from the delta store 42 in persistent storage. Although the OLAP storage 30 as a whole may be columnar, it will be appreciated that the delta store 42 may store changes in row format until the changes are implemented to the base store 44 in column format. The delta store 42 may be in-memory while the base store 44 may be on-disk.

In order to ensure data freshness of the base store 44 for OLAP queries, the OLAP storage 30 may further include a replication framework 46 configured to perform log shipping of the logs 38 from the log store 36 to the delta store 42. In particular, the replication framework 46 may ship logical logs to the OLAP storage 30. The replication framework 46 may distribute the logs 38 to multiple storage nodes for each partition to build a columnar data store residing on different storage nodes from its corresponding row store.

The OLAP engine 14 may include a plurality of coordinators 48 for distributed plan generation and optimization, and a plurality of data servers 50 for distributed plan execution. A centralized cluster manager 52 may allow users to create resource groups out of the data servers 50, and may allocate data servers 50 from a default resource group 54 to a new resource group 56 as needed according to workload. For processing the query 34 at the OLAP engine 14, the secondary engine plugins 20 may generate a MYSQL-compatible query plan and perform simple optimizations before sending the partially optimized query plan, together with required metadata, to the coordinators 48 for distributed plan generation and optimization. After optimization, a co-located query scheduler may send fragment of the plan to a set of the data servers 50 for execution, which may read the data from the OLAP storage 30 and periodically send heartbeats to the cluster manager 52. The final result from the query may be buffered at one of the data servers 50 and fetched by the secondary engine plugins 20.

On a basic level, the OLTP engine 12, OLAP engine 14, and shared storage 26 may be made up of a plurality of servers working together to form a compute layer (e.g., the OLTP engine 12 and the OLAP engine 14) and a storage layer (e.g., the shared storage 26). In one example, the HTAP database 10 includes a plurality of clusters managed by the cluster manager 52, and each cluster includes six database servers, with four data servers 50 forming the OLAP engine 14 of that cluster and one RW node 16 and one RO node forming the OLTP engine 12 of that cluster. The shared storage 26 may include a plurality of storage servers, for example, three per cluster. It will be appreciated that this is merely one example and other suitable numbers of machines may be utilized.

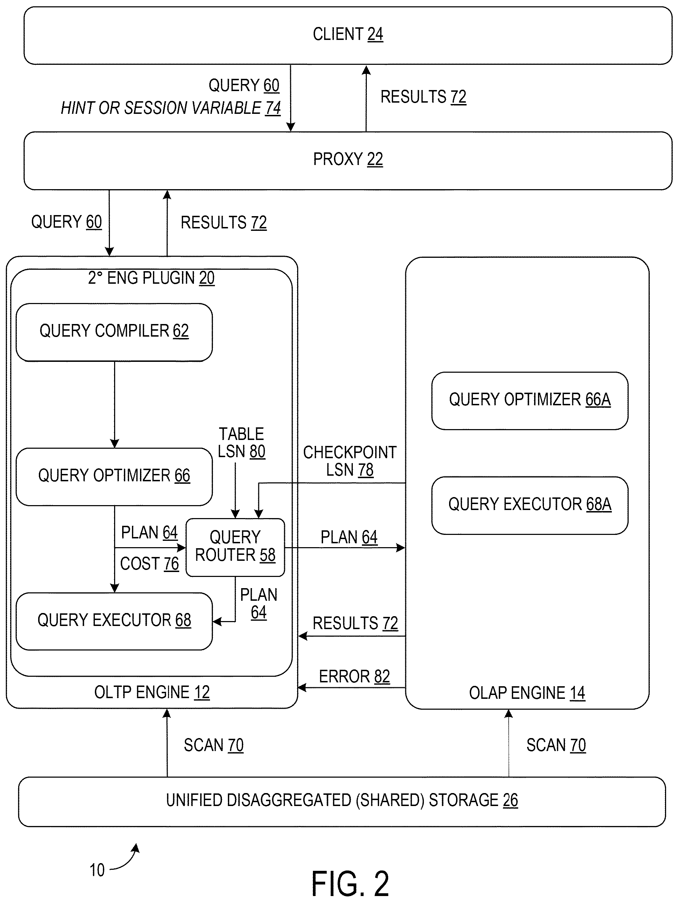

FIG. 2 shows detailed operation of a query router 58 of the HTAP database 10 of FIG. 1. Briefly, the OLTP engine 12 may include a query router 58 configured to route a query 60 received by the OLTP engine 12 to either the OLAP engine 14 or the OLTP engine 12 for execution. When the HTAP database 10 first receives the query 60 from the client 24, it is sent to the proxy 22 as discussed above. The proxy 22 is configured to receive the query 60 from the client 24 and send the query 60 to the OLTP engine 12 in all cases, rather than the proxy 22 determining which engine 12, 14 should execute the query 60. As mentioned with respect to FIG. 1, the OLTP engine 12 further includes the secondary engine plugin 20 that includes the query router 58. This configuration allows for more complex query routing by the query router 58 included within the OLTP engine 12 rather than within a proxy layer prior to the compute layer.

In more detail, the OLTP engine 12 further includes a plurality of modules for processing queries, which modules may be found within the secondary engine plugin 20. The OLTP engine 12 may include a query compiler 62 configured to parse the query 60, that is, analyze the query and determine how the query 60 can be executed, and generate an initial version of a plan 64 for responding to the query 60. The OLTP engine 12 may include a query optimizer 66 configured to optimize the plan 64 with simple optimizations and send the plan 64 to the query router 58. The simple optimizations may include expression handling, such as data type deducing and casting and constant folding optimization, for example. The query compiler 62 and the query optimizer 66 may be compatible with MYSQL in terms of syntax, semantics, etc. of queries.

The OLTP engine 12 may further include a query executor 68 configured to execute the query 60 when the query router 58 routes the query 60 to the OLTP engine 12, that is, when the query router 58 determines that the query 60 should be executed by the OLTP engine 12 rather than the OLAP engine 14 and forwards the plan 64 to the query executor 68 for execution. In contrast, when the query router 58 determines that the query 60 should be executed by the OLAP engine 14 rather than the OLTP engine 12, the query router 58 routes the query 60 by forwarding the plan 64 to a query optimizer 66A of the OLAP engine 14. The query optimizer 66A of the OLAP engine 14 receives the plan 64 which is suitable for OLTP execution and converts it to an OLAP-friendly version of the plan 64. Then, a query executor 68A of the OLAP engine 14 may execute the query 60 via the plan 64, the shared storage 26 may perform the requested scan 70, and the query executor 68 may return results 72 to the client 24 via the OLTP engine 12 and the proxy 22.

The query router 58 may be configured to take several various factors into consideration when routing the query 60. First, the query router 58 may be configured to receive user input from the client 24, the user input comprising a session variable or query hint 74 indicating selection of the OLTP engine 12 or the OLAP engine 14. Thus, the user submitting the query 60 may be able to select themselves which engine 12, 14 the user wants to execute the query 60. In response, the query router 58 may be configured to route the query 60 at least in part based on the user input.

Second, the query optimizer 66 may be configured to calculate a cost score 76 of the query 60, reflecting the complexity of the query. The cost score 76 may be considered an estimate of the memory and/or processing usage needed to complete the query 60. The query router 58 may be configured to receive the cost score 76 and route the query 60 based at least in part on the cost score 76 by routing the query 60 to the OLAP engine 14 if the cost score 76 is greater than a threshold value, and routing the query 60 to the OLTP engine 12 if the cost score 76 is less than or equal to the threshold value. In this manner, complex and high-latency queries can be sent to the OLAP engine 14 to avoid overloading the OLTP engine 12 and affecting the transactions currently being processed there, and also because the OLAP engine 14 is more efficient at processing such queries. The threshold value may be a predetermined value, or may be dynamically updated based on the current workloads of both engines 12, 14. Furthermore, the hint or session variable 74 may be used to configure the threshold value by a user.

Third, the query router 58 may be further configured to receive a checkpoint log sequence number (LSN) 78 from the OLAP engine 14 and a table LSN 80 of data to be accessed in order to execute the query 60. The checkpoint LSN 78 may be the LSN of the last logical log record persisted in the OLAP storage 30, and the table LSN 80 may be identified by the query compiler 62 analyzing the query 60 to identify relevant tables in the shared storage 26 that will be accessed to execute the query 60. The OLTP engine 12 may periodically check the shared storage 26 for the latest table LSN 80 and the OLAP engine 14 for the latest checkpoint LSN 78. Then, query router 58 may be further configured to route the query 60 based at least in part on the checkpoint LSN 78 by routing the query to the OLAP engine 14 if the checkpoint LSN 78 is more recent than or equal to the table LSN 80 (i.e., the number is higher), and routing the query 60 to the OLTP engine 12 if the checkpoint LSN 78 is less recent than the table LSN 80 (i.e., the number is lower). This LSN check ensures that the query 60 is executed using fresh data. As functions such as insert, delete, and update of data are handled by the OLTP engine 12 and synchronized to the OLAP storage 30 by log shipping, it is possible that the OLAP engine could use old data to execute the query 60 if the latest data commit has not yet been replicated to the OLAP storage 30. Accordingly, in order to return consistent results 72 regardless of whether the OLTP engine 12 or the OLAP engine 14 is used, the LSN check sends the query 60 to the OLAP engine 14 when it has up-to-date data and otherwise may send the query 60 to the OLTP engine 12 which always has the most recent update.

In some instances, if the checkpoint LSN 78 is less recent than the table LSN 80, the query router 58 may be further configured to wait a predetermined period of time without routing the query 60 and receive a new checkpoint LSN 78 as the OLTP engine 12 periodically checks for updates. Then, if the new checkpoint LSN 78 is still less recent than the table LSN 80, the query router 58 may be configured to route the query 60 to the OLTP engine 12, but if the new checkpoint LSN 78 is more recent than or equal to the table LSN 80, the query router 58 may be configured to route the query 60 to the OLAP engine 14. Thus, the query router 58 may be configured to wait the predetermined period in case the checkpoint LSN is updated and the OLAP engine 14 can be used to execute the query 60, but not delay the query 60 indefinitely waiting for the OLAP engine 14 to be updated. Further, the user input may indicate selection of the OLTP engine as discussed above, through the hint or session variable 74. The OLTP engine 12 may be configured to report back to the user when the query router 58 is waiting the predetermined period of time, and allow the user to provide the hint or session variable 74 at this stage as well, in case the user does not prefer to wait for the OLAP engine 14.

Fourth, the query router 58 may be further configured to detect a syntax or operator of the query 60 that is not supported by the OLAP engine 14. As some syntaxes and operators are supported by the OLTP engine 12 but potentially not the OLAP engine 14, in response to detecting the unsupported parts of the query 60, the query router 58 may be configured to route the query to the OLTP engine 12 which does support the syntaxes and operators. For example, the OLTP engine 12 may be completely compatible with MYSQL due at least to the secondary engine plugin 20, but the OLAP engine 14 may lack such a plugin. DDLs and DMLs in particular will always be sent to the OLTP engine 12, and other examples of unsupported queries may exist. It is noted that when the user input indicates selection of the OLAP engine 14 and the query router 58 detects the syntax or operator of the query 60 that is not supported by the OLAP engine 14, then the OLTP engine 12 may be further configured to return an error 82 to the client 24 in response. Thus, the OLAP engine 14 will be prevented from executing an unsupported query and the user can be informed of the circumstances via the error 82. It will be appreciated that the query router 58 may be configured to utilize any combination of these four factors or additional factors in routing the query 60.

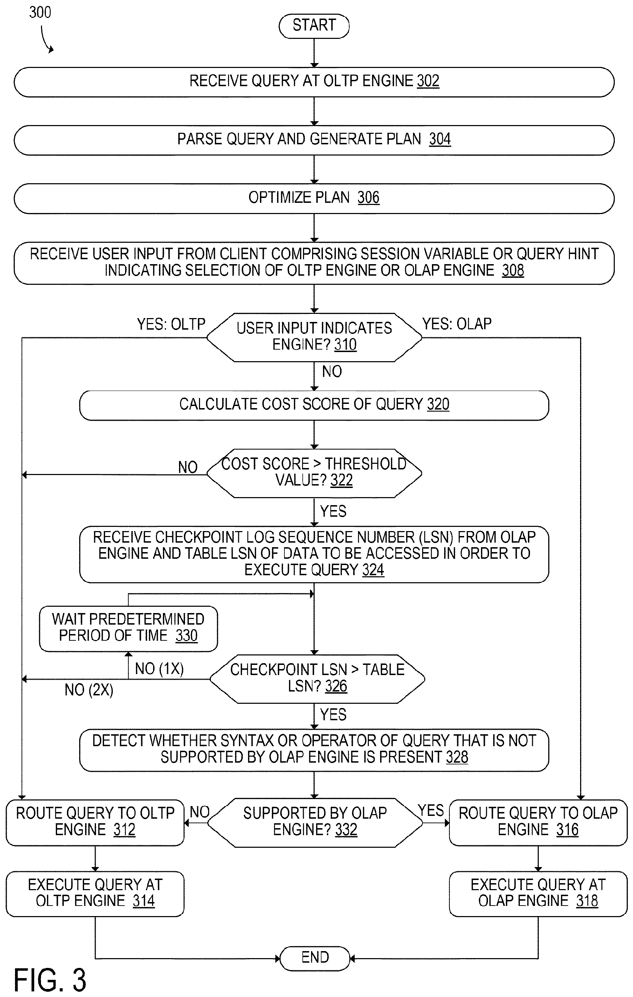

FIG. 3 shows a flowchart for a method 300 for routing queries in a HTAP database according to the present disclosure. The method 300 may be implemented by the HTAP database 10 illustrated in FIG. 1, and performed at the OLTP engine 12. Thus, the HTAP database may include a shared storage holding data, an online analytical processing (OLAP) engine, and an online transaction processing (OLTP) engine provided separately from the OLAP engine. In some cases, the HTAP database may further include a proxy configured to receive a query from a client and send the query to the OLTP engine, and the OLTP engine may include a secondary engine plugin that routes the query.

With reference to FIG. 3, at 302, the method 300 may include routing a query received by the OLTP engine to either the OLAP engine or the OLTP engine for execution. At 304, the method 300 may include parsing the query and generating a plan. At 306, the method 300 may include optimizing the plan. Next, various factors may be taken into consideration for routing the query to the appropriate engine, alone or in combination. At 308, the method 300 may include receiving user input from a client, the user input comprising a session variable or query hint indicating selection of the OLTP engine or the OLAP engine. The query is then routed based at least in part on the user input so that the user is able to have more control over how the query is executed. At 310, if the user input indicates the OLTP engine, then the method 300 proceeds to 312, routing the query to the OLTP engine. Then, at 314, the method may include executing the query when the query is routed to the OLTP engine. On the other hand, if the user input indicates the OLTP engine, then the method 300 proceeds to 316, routing the query to the OLAP engine. Then, at 318, the method may include executing the query at the OLAP engine. However, as noted above, selecting the OLAP engine to execute a query having an unsupported syntax or operator may result in an error.

At 320, the method 300 may include calculating a cost score of the query. The query may be routed based at least in part on the cost score, by routing the query to the OLTP engine if the cost score is less than or equal to the threshold value (NO at 322), or continuing to step 324, which may result in routing the query to the OLAP engine, if the cost score is greater than a threshold value. Thus, complex and high-latency queries can be sent to the OLAP engine which is more efficient at processing such queries, which also avoids overloading the OLTP engine and affecting the transactions currently being processed there.

At 324, the method 300 may include receiving a checkpoint log sequence number (LSN) from the OLAP engine and a table LSN of data to be accessed in order to execute the query. At 326, the method 300 may include routing the query based at least in part on the checkpoint LSN by routing the query to the OLTP engine if the checkpoint LSN is less recent than the table LSN (NO at 326), and or continuing to step 328, which may result in routing the query to the OLAP engine if the checkpoint LSN is more recent than or equal to the table LSN (YES at 326). In this manner, the method may be able to take data freshness into account when routing the query. Furthermore, before sending the query to the OLTP engine, the first time the method 300 determines NO at 326, the method 300 may include waiting a predetermined period of time without routing the query and receiving a new checkpoint LSN at 330. Then, if the new checkpoint LSN is still less recent than the table LSN, routing the query to the OLTP engine (NO at 326), and if the new checkpoint LSN is more recent than or equal to the table LSN, routing the query to the OLAP engine (YES at 326). This brief pause allows for the OLAP engine to update its data in time to execute the query, without causing an undue delay to the user.

At 328, the method 300 may detect whether or not a syntax or operator of the query that is not supported by the OLAP engine is present. At 332, the method 300 may include determining whether or not the query is supported by the OLAP engine. If it is detected that a syntax or operator of the query is not supported by the OLAP engine (NO at 332), then in response, the method may include routing the query to the OLTP engine. If the query is instead fully supported by the OLAP engine (YES at 332), then the query is routed to the OLAP engine. Accordingly, regardless of whether the OLAP data is fresh or how complex the query is, if the query is unsupported by the OLAP engine, then the query may be routed to the OLTP engine for execution instead.

The systems and methods disclosed herein are able to provide a hybrid database that is able to competently process both transaction and analytical queries. By taking various factors into consideration such as user input, data freshness, and cost, the OLTP engine to which all queries are first routed may be able to efficiently route queries to itself or to the OLAP engine for execution while ensuring that the best engine for the job is selected.

In some embodiments, the methods and processes described herein may be tied to a computing system of one or more computing devices. In particular, such methods and processes may be implemented as a computer-application program or service, an application-programming interface (API), a library, and/or other computer-program product.

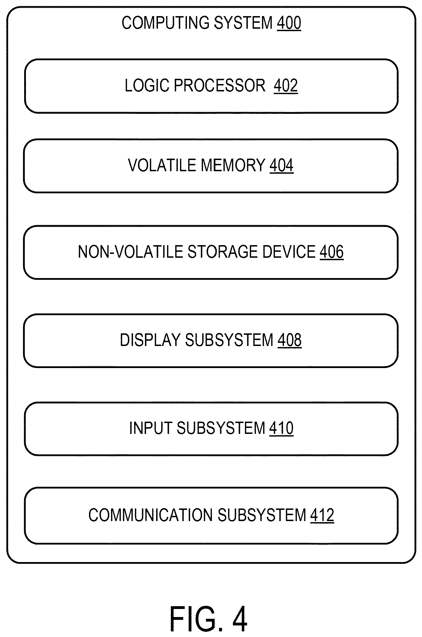

FIG. 4 schematically shows a non-limiting embodiment of a computing system 400 that can enact one or more of the methods and processes described above. Computing system 400 is shown in simplified form. Computing system 400 may embody HTAP database 10 described above and illustrated in FIG. 2. Computing system 400 may take the form of one or more personal computers, server computers, tablet computers, home-entertainment computers, network computing devices, gaming devices, mobile computing devices, mobile communication devices (e.g., smartphone), and/or other computing devices, and wearable computing devices such as smart wristwatches and head mounted augmented reality devices.

Computing system 400 includes a logic processor 402 volatile memory 404, and a non-volatile storage device 406. Computing system 400 may optionally include a display subsystem 408, input subsystem 410, communication subsystem 412, and/or other components not shown in FIG. 4.

Logic processor 402 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 402 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 406 includes one or more physical devices configured to hold instructions executable by the logic processors to implement the methods and processes described herein. When such methods and processes are implemented, the state of non-volatile storage device 406 may be transformed-e.g., to hold different data.

Non-volatile storage device 406 may include physical devices that are removable and/or built-in. Non-volatile storage device 406 may include optical memory (e.g., CD, DVD, HD-DVD, Blu-Ray Disc, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 406 may include nonvolatile, dynamic, static, read/write, read-only, sequential-access, location-addressable, file-addressable, and/or content-addressable devices. It will be appreciated that non-volatile storage device 406 is configured to hold instructions even when power is cut to the non-volatile storage device 406.

Volatile memory 404 may include physical devices that include random access memory. Volatile memory 404 is typically utilized by logic processor 402 to temporarily store information during processing of software instructions. It will be appreciated that volatile memory 404 typically does not continue to store instructions when power is cut to the volatile memory 404.

Aspects of logic processor 402, volatile memory 404, and non-volatile storage device 406 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 400 typically implemented in software by a processor to perform a particular function using portions of volatile memory, which function involves transformative processing that specially configures the processor to perform the function. Thus, a module, program, or engine may be instantiated via logic processor 402 executing instructions held by non-volatile storage device 406, using portions of volatile memory 404. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 408 may be used to present a visual representation of data held by non-volatile storage device 406. The visual representation may take the form of a graphical user interface (GUI). As the herein described methods and processes change the data held by the non-volatile storage device, and thus transform the state of the non-volatile storage device, the state of display subsystem 408 may likewise be transformed to visually represent changes in the underlying data. Display subsystem 408 may include one or more display devices utilizing virtually any type of technology. Such display devices may be combined with logic processor 402, volatile memory 404, and/or non-volatile storage device 406 in a shared enclosure, or such display devices may be peripheral display devices.

When included, input subsystem 410 may comprise or interface with one or more user-input devices such as a keyboard, mouse, touch screen, or game controller. When included, communication subsystem 412 may be configured to communicatively couple various computing devices described herein with each other, and with other devices. Communication subsystem 412 may include wired and/or wireless communication devices compatible with one or more different communication protocols. As non-limiting examples, the communication subsystem may be configured for communication via a wireless telephone network, or a wired or wireless local- or wide-area network, such as a HDMI over Wi-Fi connection. In some embodiments, the communication subsystem may allow computing system 400 to send and/or receive messages to and/or from other devices via a network such as the Internet.

The following paragraphs provide additional description of the subject matter of the present disclosure. One aspect provides a hybrid transactional/analytical processing (HTAP) database. The HTAP database comprises a shared storage holding data, an online analytical processing (OLAP) engine, and an online transaction processing (OLTP) engine provided separately from the OLAP engine. The OLTP engine includes a query router configured to route a query received by the OLTP engine to either the OLAP engine or the OLTP engine for execution. In this aspect, additionally or alternatively, the OLTP engine further includes a query compiler configured to parse the query and generate a plan, a query optimizer configured to optimize the plan and send the plan to the query router, and a query executor configured to execute the query when the query router routes the query to the OLTP engine. In this aspect, additionally or alternatively, the query optimizer is further configured to calculate a cost score of the query, and the query router is configured to receive the cost score and route the query based at least in part on the cost score by routing the query to the OLAP engine if the cost score is greater than a threshold value, and routing the query to the OLTP engine if the cost score is less than or equal to the threshold value. In this aspect, additionally or alternatively, the query router is further configured to receive a checkpoint log sequence number (LSN) from the OLAP engine and a table LSN of data to be accessed in order to execute the query, and route the query based at least in part on the checkpoint LSN by routing the query to the OLAP engine if the checkpoint LSN is more recent than or equal to the table LSN, and routing the query to the OLTP engine if the checkpoint LSN is less recent than the table LSN. In this aspect, additionally or alternatively, if the checkpoint LSN is less recent than the table LSN, the query router is further configured to wait a predetermined period of time without routing the query and receive a new checkpoint LSN, and then if the new checkpoint LSN is still less recent than the table LSN, route the query to the OLTP engine, and if the new checkpoint LSN is more recent than or equal to the table LSN, route the query to the OLAP engine. In this aspect, additionally or alternatively, the query router is further configured to detect a syntax or operator of the query that is not supported by the OLAP engine, and in response, route the query to the OLTP engine. In this aspect, additionally or alternatively, the query router is further configured to receive user input from a client, the user input comprising a session variable or query hint indicating selection of the OLTP engine or the OLAP engine, and route the query at least in part based on the user input. In this aspect, additionally or alternatively, the user input indicates selection of the OLAP engine, the query router is further configured to detect a syntax or operator of the query that is not supported by the OLAP engine, and the OLTP engine is further configured to return an error to the client in response. In this aspect, additionally or alternatively, the HTAP database further comprises a proxy configured to receive the query from a client and send the query to the OLTP engine, and the OLTP engine further includes a secondary engine plugin that includes the query router.

Another aspect provides a method for routing queries in a hybrid transactional/analytical processing (HTAP) database including a shared storage holding data, an online analytical processing (OLAP) engine, and an online transaction processing (OLTP) engine provided separately from the OLAP engine. The method comprising, at the OLTP engine, routing a query received by the OLTP engine to either the OLAP engine or the OLTP engine for execution. In this aspect, additionally or alternatively, the method further comprises parsing the query and generating a plan, optimizing the plan, and executing the query when the query is routed to the OLTP engine. In this aspect, additionally or alternatively, the method further comprises calculating a cost score of the query, and routing the query based at least in part on the cost score by routing the query to the OLAP engine if the cost score is greater than a threshold value, and routing the query to the OLTP engine if the cost score is less than or equal to the threshold value. In this aspect, additionally or alternatively, the method further comprises receiving a checkpoint log sequence number (LSN) from the OLAP engine and a table LSN of data to be accessed in order to execute the query, and routing the query based at least in part on the checkpoint LSN by routing the query to the OLAP engine if the checkpoint LSN is more recent than or equal to the table LSN, and routing the query to the OLTP engine if the checkpoint LSN is less recent than the table LSN. In this aspect, additionally or alternatively, if the checkpoint LSN is less recent than the table LSN, the method further comprises waiting a predetermined period of time without routing the query and receiving a new checkpoint LSN, and then if the new checkpoint LSN is still less recent than the table LSN, routing the query to the OLTP engine, and if the new checkpoint LSN is more recent than or equal to the table LSN, routing the query to the OLAP engine. In this aspect, additionally or alternatively, the method further comprises detecting a syntax or operator of the query that is not supported by the OLAP engine, and in response, routing the query to the OLTP engine. In this aspect, additionally or alternatively, the method further comprises receiving user input from a client, the user input comprising a session variable or query hint indicating selection of the OLTP engine or the OLAP engine, and routing the query based at least in part on the user input. In this aspect, additionally or alternatively, the HTAP database further includes a proxy configured to receive the query from a client and send the query to the OLTP engine, and the OLTP engine includes a secondary engine plugin that routes the query.

Another aspect provides a hybrid transactional/analytical processing (HTAP) database. The HTAP database comprises a shared storage holding data, an online analytical processing (OLAP) engine, and an online transaction processing (OLTP) engine provided separately from the OLAP engine. The OLTP engine includes a query compiler configured to parse a query received by the OLTP engine and generate a plan, a query optimizer configured to optimize the plan, calculate a cost score of the query, and send the plan and the cost score to a query router, and a query executor configured to execute the query when the query router routes the query to the OLTP engine. The query router is configured with a plurality of routing policies, each routing policy being ranked by a policy priority rank, the query router being configured to make a routing decision to route the query to the OLTP engine or the OLAP engine based upon the plurality of routing policies according to their policy priority rank. In this aspect, additionally or alternatively, the plurality of policies includes a computational cost policy, a data recency policy, and a support policy ranked in this order. In this aspect, additionally or alternatively, the query router is configured to route the query to the OLTP engine if the cost score is less than or equal to a threshold value according to the computational cost policy, a checkpoint log sequence number (LSN) received from the OLAP engine is less recent than a table LSN of data to be accessed in order to execute the query, according to the data recency policy, or the query router detects a syntax or operator of the query that is not supported by the OLAP engine according to the support policy, and the query router is configured to route the query to the OLAP engine if the cost score is greater than the threshold value according to the computational cost policy, the checkpoint LSN is more recent than or equal to the table LSN according to the data recency policy, and the query router does not detect the syntax or operator of the query that is not supported by the OLAP engine according to the support policy.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A hybrid transactional/analytical processing, HTAP, database (10), comprising:
a shared storage (26) holding data;
an online analytical processing, OLAP, engine (14); and
an online transaction processing, OLTP, engine (12) provided separately from the OLAP engine (14), the OLTP engine (12) including a query router configured to route a query received by the OLTP engine (12) to either the OLAP engine (14) or the OLTP engine (12) for execution.

2. The HTAP database (10) of claim 1, wherein the OLTP engine (12) further includes:
a query compiler configured to parse the query and generate a plan;
a query optimizer configured to optimize the plan and send the plan to the query router; and
a query executor configured to execute the query when the query router routes the query to the OLTP engine (12).

3. The HTAP database (10) of claim 2, wherein
the query optimizer is further configured to calculate a cost score of the query, and
the query router is configured to receive the cost score and route the query based at least in part on the cost score by:
routing the query to the OLAP engine (14) if the cost score is greater than a threshold value; and
routing the query to the OLTP engine (12) if the cost score is less than or equal to the threshold value.

4. The HTAP database of claim 1, wherein the query router is further configured to:
receive a checkpoint log sequence number, LSN, from the OLAP engine (14) and a table LSN of data to be accessed in order to execute the query; and
route the query based at least in part on the checkpoint LSN by:
routing the query to the OLAP engine (14) if the checkpoint LSN is more recent than or equal to the table LSN; and
routing the query to the OLTP engine if the checkpoint LSN is less recent than the table LSN.

5. The HTAP database (10) of claim 4, wherein if the checkpoint LSN is less recent than the table LSN, the query router is further configured to wait a predetermined period of time without routing the query and receive a new checkpoint LSN, and then:
if the new checkpoint LSN is still less recent than the table LSN, route the query to the OLTP engine (12); and
if the new checkpoint LSN is more recent than or equal to the table LSN, route the query to the OLAP engine (14).

6. The HTAP database (10) of claim 1, wherein the query router is further configured to:
detect a syntax or operator of the query that is not supported by the OLAP engine (14); and
in response, route the query to the OLTP engine (12).

7. The HTAP database (10) of claim 1, wherein the query router is further configured to:
receive user input from a client, the user input comprising a session variable or query hint indicating selection of the OLTP engine (12) or the OLAP engine (14); and
route the query at least in part based on the user input.

8. The HTAP database (10) of claim 7, wherein
the user input indicates selection of the OLAP engine (14),
the query router is further configured to detect a syntax or operator of the query that is not supported by the OLAP engine (14), and
the OLTP engine (12) is further configured to return an error to the client in response.

9. The HTAP database (10) of claim 1, further comprising a proxy configured to receive the query from a client and send the query to the OLTP engine (12), wherein
the OLTP engine (12) further includes a secondary engine plugin that includes the query router.

10. A method for routing queries in a hybrid transactional/analytical processing, HTAP, database (10) including a shared storage (26) holding data, an online analytical processing, OLAP, engine, and an online transaction processing, OLTP, engine provided separately from the OLAP engine (14), the method comprising, at the OLTP engine (12):
routing a query received by the OLTP engine (12) to either the OLAP engine (14) or the OLTP engine (12) for execution.

11. The method of claim 10, further comprising:
parsing the query and generating a plan;
optimizing the plan; and
executing the query when the query is routed to the OLTP engine (12).

12. The method of claim 10, further comprising:
calculating a cost score of the query;
routing the query based at least in part on the cost score by:
routing the query to the OLAP engine (14) if the cost score is greater than a threshold value; and
routing the query to the OLTP engine (12) if the cost score is less than or equal to the threshold value, and
the method further comprising:
detecting a syntax or operator of the query that is not supported by the OLAP engine (14); and
in response, routing the query to the OLTP engine (12), and
the method further comprising:
receiving user input from a client, the user input comprising a session variable or query hint indicating selection of the OLTP engine (12) or the OLAP engine (14); and
routing the query based at least in part on the user input.
wherein
the HTAP database (10) further includes a proxy configured to receive the query from a client and send the query to the OLTP engine (12), and
the OLTP engine (12) includes a secondary engine plugin that routes the query.

13. The method of claim 10, further comprising:
receiving a checkpoint log sequence number, LSN, from the OLAP engine (14) and a table LSN of data to be accessed in order to execute the query; and
routing the query based at least in part on the checkpoint LSN by:
routing the query to the OLAP engine (14) if the checkpoint LSN is more recent than or equal to the table LSN; and
routing the query to the OLTP engine (12) if the checkpoint LSN is less recent than the table LSN.

14. The method of claim 13, wherein if the checkpoint LSN is less recent than the table LSN, the method further comprises waiting a predetermined period of time without routing the query and receiving a new checkpoint LSN, and then:
if the new checkpoint LSN is still less recent than the table LSN, routing the query to the OLTP engine (12); and
if the new checkpoint LSN is more recent than or equal to the table LSN, routing the query to the OLAP engine (14).

15. A hybrid transactional/analytical processing, HTAP, database (10), comprising:
a shared storage (26) holding data;
an online analytical processing, OLAP, engine (14); and
an online transaction processing, OLTP, engine provided separately from the OLAP engine (14), the OLTP engine (12) including:
a query compiler configured to parse a query received by the OLTP engine (12) and generate a plan;
a query optimizer configured to optimize the plan, calculate a cost score of the query, and send the plan and the cost score to a query router; and
a query executor configured to execute the query when the query router routes the query to the OLTP engine (12), wherein
the query router is configured with a plurality of routing policies, each routing policy being ranked by a policy priority rank, the query router being configured to make a routing decision to route the query to the OLTP engine (12) or the OLAP engine (14) based upon the plurality of routing policies according to their policy priority rank.
